# EUROPEAN PATENT APPLICATION

(11) **EP 2 514 336 A2**
(43) Date of publication of application: **24.10.2012**
(21) Application number: 12164704.4
(22) Date of filing: 19.04.2012
(51) Int. Cl.: A46B 11/06, B60S 3/04

(54) **Wash brush**

(30) Priority: 19.04.2011 FI 20110137 U
(71) Applicant: Sinituote Oy, 05820 Hyvinkää (FI)
(72) Inventor: Timonen, Petri, FI-33270 Tampere (FI)
(74) Representative: Jaala, Jukka Arvi

(57) **Abstract**

A wash brush (4), which consists of a hollow shaft (1), as well as a wash head (3) removably attachable to the shaft (1) and provided with bristles (6), whereby inside the hollow shaft extends a water channel (1; 15), and a mouth (15; 15a) of the shaft opens into a connecting piece (2) coupled to the shaft, by means of which connecting piece (2) the hollow shaft (1) is removably connectable to the wash head (3), said wash head comprising a rather flat body (30), through which extends an opening (7) and said body (3) having its side opposite with respect to the shaft provided with the bristles (6). In the wash brush,
-the opening (7) in the wash head body has an inner diameter which is larger in a top section (7a) of said opening than in a bottom section (7b) of the same opening, and the body's bottom section (7b) has its inner walls (70) provided with a set of recesses (71),
-the connecting piece (2) has a set of concentric tabs (5), which are contiguous with the periphery of an annular base (50a) of a tab set (50) at regular circumferential distances from each other, whereby on an outer surface (5c) of at least one tab (5), in the proximity of a free end (5a) of the tab, there is at least one fabricated shape (52) capable of being fitted in a recess (71) of the wash head opening (7), such that between the tab set's (50) tabs (5) and the body's opening (7) can be established a form locking by means of the tabs' fabricated shapes (52) and the recesses (71) complementary thereto, and
- the tabs contiguous with the periphery of the tab set's (50) annular base (50a) have an outer diameter (D11) which is approximately equal to or slightly larger than an inner diameter (d) of the opening (7) passing through the wash head body (3; 30) in the top section (7b) of said opening (7), such that between the tabs (5) and said top section (7b) of the opening can be established a tight fit capable of producing a specific compression pressure Pg between the tabs (7) and the top section (7b) of the opening (7) for setting the tabs (5) and the opening (7) in mutual compression locking.

## Description

The invention relates to a wash brush as set forth in claim 1, which consists of a hollow shaft, as well as a wash head removably attachable to the shaft and provided with bristles.

The prior art discloses a plurality of wash brushes intended for car washing with an objective to improve the user friendliness and performance of the brush by making the wash head rotatable and capable of being locked in a specific position relative to the shaft with some powered, such as electrically powered rotating practice, and with an accompanying intricate relative locking system for the shaft and the rotary head.

On the other hand, it is an object in the invention to improve the washing performance and user friendliness of a wash brush in such a way that the wash head with bristles can be supplied with water by way of the shaft serving as a handle of the wash brush, but rotating the wash head with bristles and the shaft relative to each other occurs manually, and locking a relative position between the wash head and the shaft is effected by using a simple, yet highly effective locking practice in order to keep the brush structure simple.

The wash brush according to the invention, which is intended primarily for car washing, consists more specifically of a hollow shaft, as well as a wash head removably attachable to the shaft and provided with bristles, whereby inside the hollow shaft extends a water channel. A mouth of the shaft opens into a connecting piece associated with the shaft, by way of which connecting piece the hollow shaft is removably attachable to the wash head, said wash head comprising a rather flat body through which extends an opening and the other side of which body, as viewed from the shaft side, is provided with bristles. The opening in the wash head body has an inner diameter which is larger in a top section of said opening than in a bottom section of the same opening, and the internal walls in a lower part of the body are provided with a set of recesses. The connecting piece is provided with a set of concentric tabs, which are contiguous with the periphery of the tab set's annular base at regular circumferential distances from each other, whereby on the outer surface of at least one tab, close to the tab's free end, there is at least one fabricated shape capable of being fitted in a recess of the wash head opening, such that between the tab set's tabs and the body's opening can be established form-locking by means of the tabs' fabricated shapes and the recesses complementary thereto. In addition, the tabs contiguous with the periphery of the tab set's annular base have an outer diameter which is approximately equal to or even slightly larger than what the inner diameter of the opening extending through the wash head body is in a top section of said opening, such that between the tabs and said top section of the opening can be established a tight fit capable of producing a certain compression between the tabs and the top section of the opening for setting the tabs and the opening in mutual compression locking.

In such a mechanical locking, which nevertheless allows for a relative rotation between the head and the hollow shaft of a wash brush, it is a major challenge to provide between the wash head and its handle a sufficiently reliable locking, which is nevertheless easy to release. In the invention, the locking between a wash head and a shaft has been effected by using a connecting piece, which is provided with finger-like tabs contiguous at their top ends with a common base of the tab set. The base of the tab set, on the other hand, attaches releasably or fixedly to the mouth of a wash head, from which water arrives in the connecting piece and further in the wash head coupled to the connecting piece. The tabs have their very bottom section/bottom end provided with fabricated shapes, which are used for form-locking the connecting piece and, at the same time, the wash brush shaft in the opening of a wash brush. For the form-locking, the wash head is in turn provided with an opening into which the connecting piece is insertable, and the opening has its bottom end provided with recesses into which the tabs' fabricated shapes can be fitted. When the connecting piece, whose bottom end is provided with form-locking shapes, is pushed to a sufficient depth into the wash head and the connecting piece is rotated in the circumferential direction of the tab set's base so as to lodge the fabricated shapes in the recesses, the result is an effective, yet relatively easy-to-release form-locking between the wash head and the connecting piece. In this case, the form-locking alone is not enough to ensure locking between the wash head and the connecting piece in the event that the water arriving in the connecting piece is at a high pressure. Therefore, an important element of the inventive locking between a wash head and a connecting piece is constituted by an elastic compression locking between those components.

In order to provide elastic compression locking based on a sufficiently high static friction, it is required that between an outer surface of the tabs and an inner surface of the body's opening be established a sufficient mutual compression force F. This is produced by providing a tight fit between the tabs' outer surface and the body's opening. Here, it should be noted that, because each finger-like tab is contiguous with the periphery of the tab set's annular base, each separate tab develops a springback factor in a radial direction of the base in the event that the tab is forced from its rest position in either direction in a radial sense of the tab set's base. The springback factor evolved in the tabs increases the elasticity of compression locking and thereby its effectiveness as the diameter of the tab set's base is equal to or slightly smaller than that of the body's opening, but the diameter of a virtual circle extending by the tabs' outer surface is slightly larger than that of the body's opening. Hence, in order to achieve compression locking, the tabs must preferably lie on a certain periphery Y11 of a circle, whose outer diameter D11 is approximately equal to or even slightly larger than an inner diameter d of the opening. For compression locking, the body's opening has been given such a shape that the opening's top section has a diameter which is smaller than that of the bottom section, and the opening's top section has its length in a depth direction of the opening considerably exceeding that of the opening's bottom section. Typically, the length of the opening's top section to that of the opening's bottom section is approximately 4-5:1-2, which ensures a sufficient friction surface between the tabs' outer surface and the opening's inner surface for providing a compression joint. Since the body's opening expands slightly in its bottom end after a boundary surface between the opening's top section and bottom section, the compression force F develops primarily between the opening's inner surface above the boundary surface (the inner surface of the opening's top section) and the outer surface of the tabs' top section.

When the base of a tab set, along with the tabs contiguous therewith, is inserted into the body's opening, the tabs have their free ends extending into a section below the opening's boundary surface. Hence, the fabricated shapes, present in the vicinity of the free ends of the tabs provided with fabricated shapes, achieve a form-locking with the opening's recesses as the connecting piece is rotated. Thus, the rest of the tabs (the tabs' top section), including the tab set's base, comes into contact with the opening's boundary surface, as well as with the section above the opening's boundary surface (the opening's top section), thereby enabling the formation of a sufficient compression joint between these components.

As for the benefits offered by the above-described wash brush, it can be stated that the wash brush structure and the mutual locking mechanism of a wash head and a shaft are simple, yet sufficiently effective to enable locking the wash head and the shaft even if there were a relatively high pressure applied on the joint by a water flow arriving in the wash head through a connecting piece. The locking mechanism is also relatively easy to dismantle by rotating the connecting piece and the wash head attached thereto in a plane of the wash head for releasing the form-locking. Also, the manufacturing costs of a wash brush equipped with such a locking mechanism remain low.

The foregoing wash brush enables a handle constituted by the hollow shaft to be rotated in a plane extending approximately in parallel with the plane of a wash head of the brush (in a circumferential direction of the tabs' base, in a vertical plane), with respect to the wash head. Rotating the handle this way with respect to the wash head of a brush enables changing a relative angle between the wash head's bristles and the handle. Depending on the wash head's shape, this offers a possibility of rotating the handle in such a way that the brush can be used for effectively washing a variety of surface contours and otherwise hard-to-clean places.

In one important embodiment of the invention, the above-described locking mechanism between a wash head and a shaft is combined with a new type of wash head. The wash head features three inward curving long sides, and the adjacent long sides are connected by a short straight side, giving the wash head an approximately triangular shape. Preferably, two of the long sides are advantageously equal in length and one of the long sides is shorter than these, whereby the triangular wash head of a wash brush consists of one longer triangle tongue and two shorter triangle tongues of equal length.

In yet another preferred embodiment of the invention, the inner surface of an opening in the wash head features two recesses in such locations that the wash head and the hollow shaft can be locked relative to each other either in such a way that the wash head has the free end of its longest triangle tongue pointing at an angle of 180 degrees away from the hollow shaft or directly towards the hollow shaft. Such a brush enables washing hard-to-clean places since the wash head has its longest tongue pointing away from the hollow shaft, in other words the longest tongue seems to provide the wash head with an extension of the hollow shaft when viewing the wash brush directly from above.

The invention and benefits obtained thereby will now be described in even more detail by means of the accompanying figures. The figures also reveal a few further advantages that can be achieved with a wash brush of the invention. Hence:
Fig. 1A shows a wash head of the wash brush directly from above in a partial cross-section.
Fig. 1B depicts a part of the wash head shown in fig. 1 at a viewing angle obliquely from above.
Fig. 2 shows the wash head of fig. 1 when viewing a body of the wash head directly from below. To simplify the figure, the wash head bristles are not shown.
Fig. 3 depicts a shaft of the wash brush in a direct lateral view.
Fig. 4 is a view from below, showing the wash head and the hollow shaft combined into a wash brush. For the sake of simplicity, the wash head bristles are not shown.
Fig. 5 shows one embodiment for a wash brush of the invention in a view from below. The wash head bristles are also shown in the figure.
Fig. 6 shows the wash brush of fig. 5 at a viewing angle obliquely from above.
Fig. 7 finally depicts how the wash brush shaft is attached to a water supply.

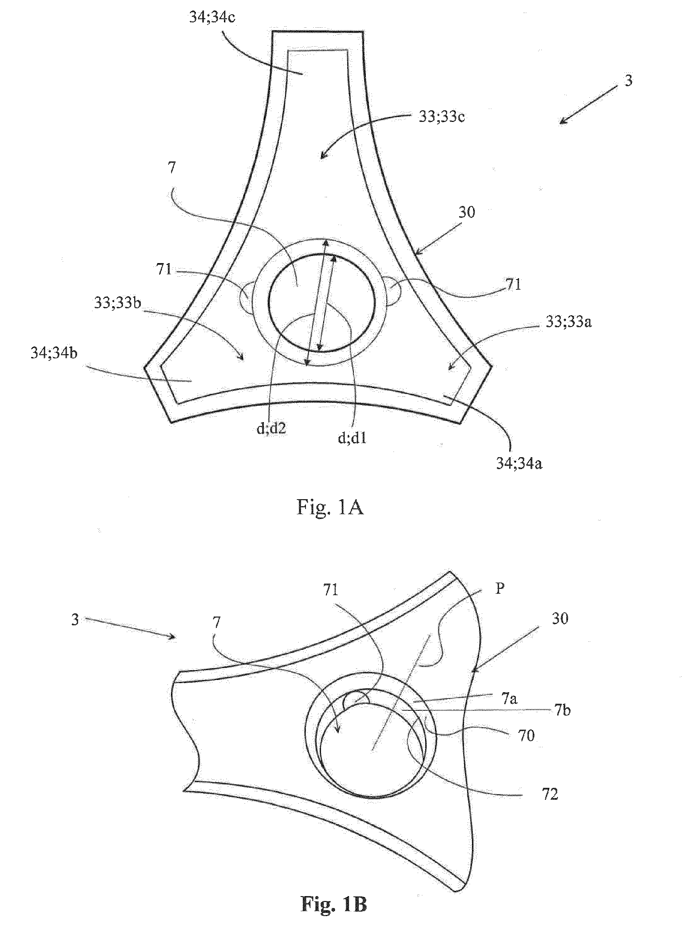

First described in the following are the main features of a wash brush shown in figs. 1-6.

The structure of a wash brush 4 intended for car washing has been kept simple and its basic idea is to arrange a wash head 3 equipped with bristles 6, and a hollow shaft 1 attached thereto, to be locked relative to each other in at least two different locking positions with an easy-to-release, simple mechanical locking system that comprises form-locking and compression locking. As the wash head 3 and the hollow shaft 1 are capable of being locked relative to each other in different locking positions, and the wash head 3 of the wash brush is given an appropriate shape, it is possible to use the wash brush 4 for washing even otherwise hard-to-clean parts of an automobile.

The wash brush 4 according to the invention consists of the hollow shaft 1, as well as the wash head 3 removably attachable to the shaft 1 and provided with the bristles 6. Inside the hollow shaft 1 extends a water channel 1; 15, whose wash head facing end 15a (=opening of the water channel) opens into a connecting piece 2 coupled fixedly or removably to the shaft 1. The opening 15a of the water channel 15 is at the same time opening 15; 15a of the hollow shaft 1.

The hollow shaft 1 is removably attachable to the wash head 3 by way of said connecting piece 2.

The wash head 3 comprises a rather flat body 30, through which extends an opening 7 with its midline T located approximately at the body's center of gravity. Hence, the midline T of the opening 7 is generally concentric with a center of gravity axis P extending through the body. To a bottom 30a of the body are attached the bristles 6. Thus, the bristles 6 are fixed on what is the opposite side of the body 30 with respect to the shaft 1 coupled into the body's opening 7.

The opening 7 in the body 30 of the wash head 3 has its inner walls provided with a set of recesses 71 and, respectively, the connecting piece 2 attached to the shaft 1 has a set of concentric rigid tabs 5, which are located on a certain periphery Y1 of a circle and which jointly make up a tab set 50. The tab set 50 is attached to a mouth collar 1; 18 of the shaft 1 by way of an annular base 50a of the tab set 50. On an outer surface of at least one tab 5, in the proximity of a free end 5a of the tab, lies at least one fabricated shape 52, which is capable of being fitted in the recess 71 of the wash head opening 7 and which impedes a relative rotational motion between the wash head 3 and the shaft 1 once the fabricated shape 52 has been fitted in the recess 71. A diameter D11 of the circle Y11, on which the outer surfaces of the tabs 50 are in turn located, is determined on the basis of a diameter D1 of the tab set's base. The circle Y11 extending by the outer surfaces of the tabs has its diameter D11 approximately equal to what is an inner diameter d; d1 of the opening 7 extending through the wash head body 3; 30 in a section of said opening 7 closer to the shaft 1, i.e. in a top section of the opening 7.

The invention will now be examined in more detail with reference to the accompanying figures, as well as to the foregoing general type description of the invention.

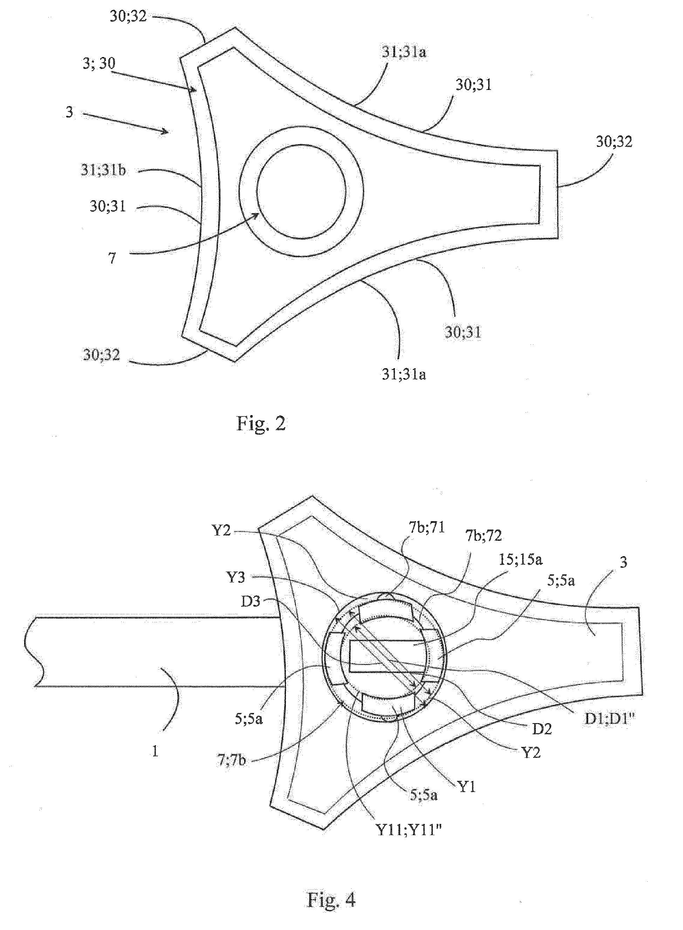

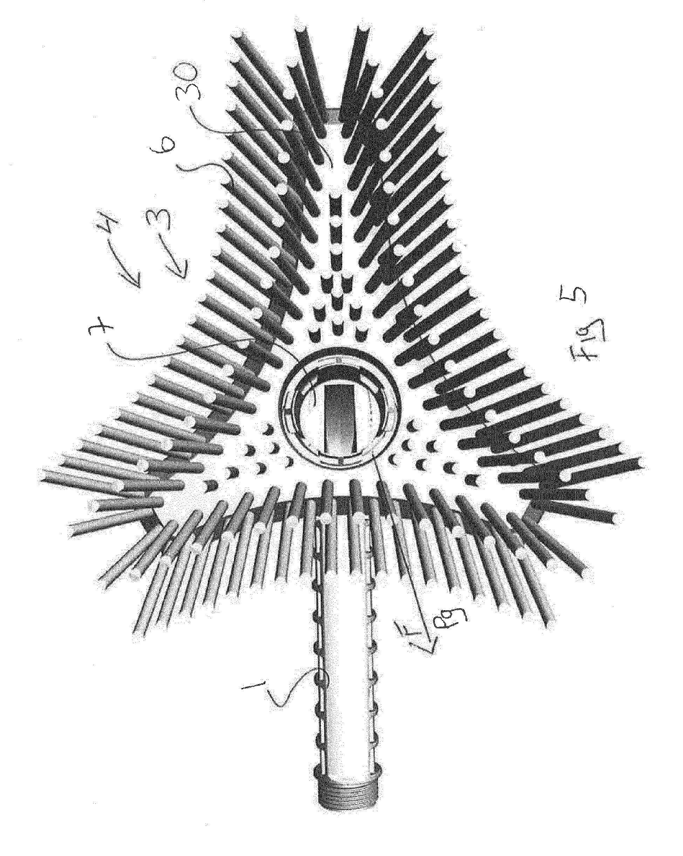

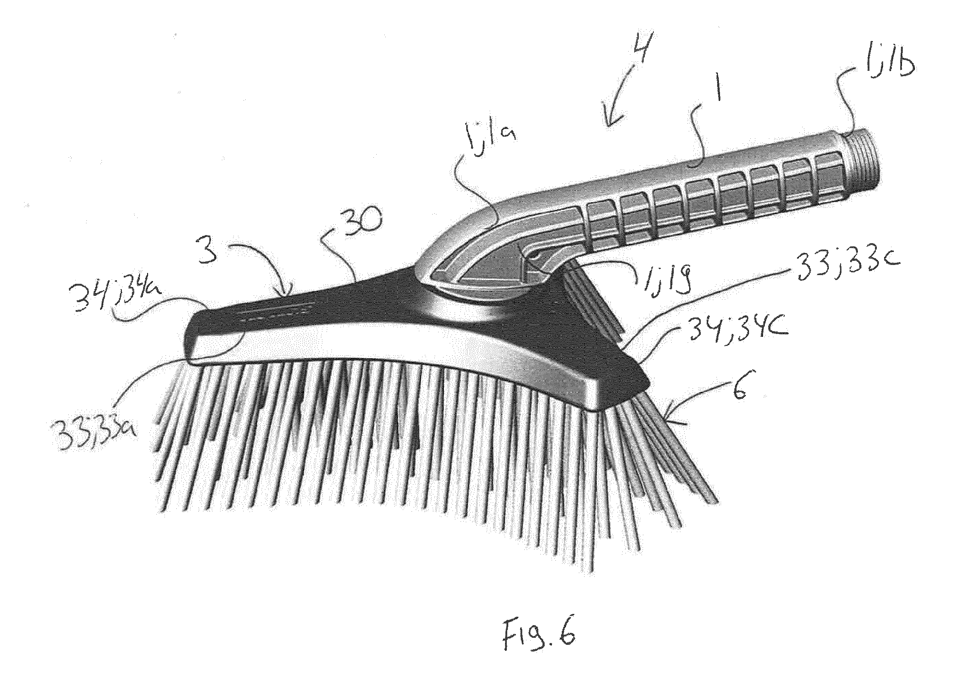

Figs. 1 A, 1 B, as well as fig. 2, illustrate at various viewing angles the body 30 of the wash head 3 from above and below (without bristles). Figs. 5 and 6 additionally show the wash head 3 provided with bristles and coupled to the hollow shaft 1. As shown in figs. 1A-1B, 2, 4, 5 and 6, the wash head body 30 is generally in the shape of an obtuse triangle, consisting of three inward curving longer sides 30; 31 and straight short sides 30; 32 connecting each two adjacent long sides 30; 31 of the triangle. As for the curving sides of the "triangle", two sides 31; 31 a are of equal length and one 31; 31 b of the curving sides is shorter than these. Through the panel type body 30 extends the opening 7 circular in cross-section, whose midpoint T is located approximately on the center of gravity line P of the triangle, i.e. at the intersection of three medians extending by way of the vertices of the triangle. When each vertex 34a, 34b and 34c of the triangle is examined individually in a view from outside the triangle directly towards the vertex, it can be said that the body 30 consists of three tongues 33; 33a, 33b, 33c. Each of the tongues comprises one straight side 30; 32 and two halves of the side 30; 31 connecting with the ends of the straight side 32 and curving towards the opening 7, each of said halves thus having a length which is half of the length of the respective curving side 31. Hence, the body 30 features two short tongues 33a and 33b as well as one longer tongue 33c, whose vertices are respectively 34a, 34b and 34c. Each side of a tongue commences from the confluence point of said side and the straight side and terminates at a point of the respective side 31, which is at perihelion or closest to the opening 7 (as viewed from the opening's midpoint).

The connecting piece 2 with the tab set 50 is capable of being pushed into the opening 7, which is present at the center of gravity of the wash head 1 and whose design is best visible in figs. 1, 2 and 4. The opening has its inner walls 7; 70 provided with two recesses 70; 71, whose shape and size are complementary to the shape and dimensions of fabricated shapes 52 to be described more precisely hereinafter and present in two tabs 5 of the connecting piece 2. The opening's inner diameter d is not constant, but changes in such a way that the inner diameter d of the opening 7 shifts from a smaller one d1 to a larger one d2 as the opening is viewed from the direction of the shaft by way of a relatively sharp-lined boundary surface 72. On the side closer to the shaft 1, the inner diameter of the opening 7 is d1, which is roughly equal to the diameter D11 of that circle Y11 on which lie the outer surfaces 5c of the tabs.

Fig. 6, in particular, illustrates very clearly one locking position for the wash head 3 and the hollow shaft 1 associated therewith. In this locking position, the hollow shaft 1 has its longitudinal axis co-directional with a median of the longer tongue 33c of the body 30, but its water fitting facing end 1; 1 b is pointing away from a tip 34; 34c of said longer tongue as the tongue tip 34 and the hollow shaft 1 are viewed from the direction of the opening 7. The other locking position has not been shown in the figures, but therein the hollow shaft 1 has been rotated relative to the body 30 of the wash head 3 in such a way that the hollow shaft 1 has its longitudinal axis co-directional with a median of the longer tongue 33 and at the same time its water fitting facing end 1; 1b is pointing towards the tip 34; 34c of said tongue as the tongue tip 34; 34c and the hollow shaft 1 are viewed from the direction of the opening 7. Fig. 5 also shows how water is supplied from the opening 7 in the body 30 of the wash head 3 onto the bristles 6, which are anchored to a surface of the body 30. On the other hand, figs. 6 and 1B also show that the longitudinal axis of the shaft 1 and the panel type wash head body are more or less co-directional in a working condition of the brush, forming in vertical direction just a slight angle relative to each other. Elements intended for providing the above-described locking positions have been illustrated more precisely in figs. 1-4, which also reveal other structural features of the hollow shaft 1 and the wash head to be discussed hereinafter.

The body 30 of the wash head 3 and the hollow shaft 1 are adapted to be locked relative to each other by means of the connecting piece 2 fastening to an end 1; 1a of the hollow shaft 1, which is the opposite end of the shaft as viewed from the direction of the wash fitting, i.e. the wash head facing end.

Inside the hollow shaft 1 itself extends the water channel 1; 15, one end of which is provided with a water fitting 1; 16 for connecting a water supply, such as for example a garden hose, to the shaft 1. The passage of water in the water channel 15 extending inside the hollow shaft can be allowed or disallowed by means of a per se conventional water seal 1; 17. The wash head facing end of the wash brush's hollow shaft 1 has been deflected to provide an enlargement 1; 19, which points at a certain angle (about 90 degrees) away from the direction of the longitudinal axis of the rest of the shaft 1 and which has its end fitted with an annular collar 1; 18 and said collar with the connecting piece 2. Hence, the shaft 1 has its wash head facing end 1 a coupled by way of its enlargement 1; 19 to the connecting piece 2, the hollow shaft 1 being removably attachable to the wash head 3 by way of said connecting piece 2.

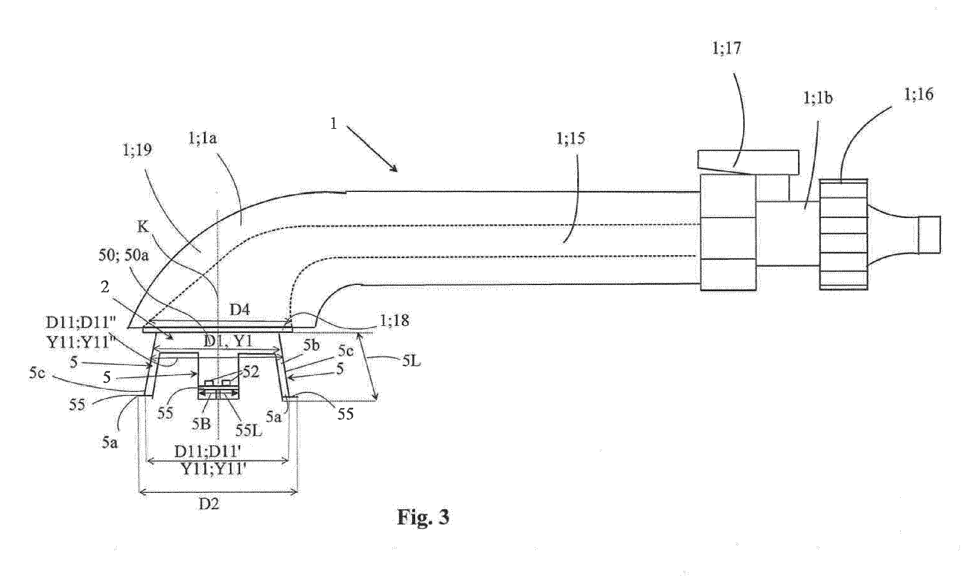

As seen in figs. 3 and 4, the connecting piece 2 consists of a set of plate-like tabs 5, which are contiguous at their root with a base 50a, which is common for the tab set 50 and which is annular and plate-like in its cross-section. The tab set 50 has its base 50a in turn fastened by its top end to an inner edge of the annular collar 1; 18 present in the mouth 15 of the shaft 1 and by its bottom end to the tabs 5.

The plate-like tabs 5 make up the tab set 50, each tab 5 of which is contiguous at its top end 5b with the annular base 50; 50a of the tab set 50, the cross-section of said base lying on a virtual circle Y1, whose diameter is D1. Thus, the tabs, which are contiguous with the base 50a of the tabs 5 included in the tab set 50, have the outer surfaces 5c of their top ends 5b lying on a certain periphery of the circle Y11. The diameter D11 of the circle Y11 is simultaneously the outer diameter for the base 50a of the tab set 50 at a bottom end of the base. The base 50a has its bottom end located approximately on the periphery of the virtual circle Y1, whose diameter is D1. In this case, the bottom end of the base 50a refers to that end of the base 50a which is contiguous with the tabs 5.

Figs. 3 and 4 are marked with virtual circles Y11; Y11' and Y11; Y11", on which lie the outer surfaces 5c of the tabs' top and bottom ends 5a, 5b, respectively. The diameters of these virtual circles Y11; Y11' and Y11; Y11" are respectively D11; D11' and D11; D11". The diameter D11; D11' of the circle Y1; Y1' extending by the outer surfaces 5c of the tabs' free ends 5a is generally approximately equal to or even slightly larger than the diameter D1; D1" of the circle Y11; Y11", extending by an outer surface of the tab set's 50 base 50a and, at the same time, by the outer surface 5c of the top end 5b of a tab contiguous with this base 50a, as shown also in fig. 3. This means that, in the lengthwise direction of the tab set's base 50a, the tabs are pointing away (downward) from the aforesaid base 50a and at the same time slightly outward in a radial direction of the tab set's base 50a. Such an orientation of the tabs favors the formation of a subsequently described compression joint between the tabs 5 and the opening 7 in the body 30. Generally, the tabs' free ends are pointing from the tab set's base at an angle of 180 degrees straight downward or at an angle of not more than 45 degrees outward in a radial direction (i.e. at an angle of not more than 45 degrees away from a midline K in a radial direction), i.e. at an angle of about 225 degrees down- and outward.

In the working examples depicted in the figures, the plate set's base 50a has four separate tabs contiguous therewith, whereby the adjacent tabs attach onto the base always at a specific circumferential distance from each other along the periphery of the base 50. Hence, the peripheral length of the base's outer surface is determined on the basis of a radius D2/2 of that circle Y1 on which the annular base 50a lies.

The circle Y1, which defines the distance between tabs 5 in the tab set 50 at top and bottom ends 5b, 5a of the tabs in a radial direction of the base, has its center located on a straight line extending by the midline K of an annular collar. The annular collar 1; 18 engages concentrically with the base 50a of the annular tab set 50. An outer diameter D4 of the collar is larger than or equal to the diameter D1 of a bottom end of the annular tab set's 50 base 50a. The outer diameter of the base 50a, and at the same time the cross-sectional diameter of a virtual cylindrical surface extending by the outer surface 5c of the tabs 5, will be determined on the basis of the diameter D1 of the tab set's base, and on the basis of a material thickness of the tabs.

On the other hand, the inner diameter of the collar 1; 18 is defined by the water channel 1; 15 according to the size of an enlargement 1; 19 at a washing end of the shaft and further the size of a water channel mouth 1; 15a opening into the connecting piece, and it is about the same as the diameter D1 of the base.

Each tab 5 consists of a finger-like plate contiguous at its top end 5b with the tab set's annular base 50a, preferably a plastic plate having a length 5L and a width 5B. The tabs 5 are flat as regards their inner surface facing the water channel's mouth 15a, while their outer surface 5c is pointing down- and outward. The outer surfaces 5c of the tabs 5 lie roughly on the periphery of the circle Y11, having its center located on the midline K. The bottom ends of the tabs 5, in other words their free ends 5; 5a, are straight. Approximately at a bottom edge of the free end 56a of each tab, on the tab's outer surface 5c, there is a shoulder 55 protruding outward from the outer surface's plane at an angle of about 90 degrees. Thus, the shoulder 55 is pointing away from the tab 5 in a radial direction of the tab set's base 50. Each shoulder 55 extends from a first lengthwise edge of the tab to a second lengthwise edge of the tab, i.e. each shoulder 55 has a length 55L which is equal to the width 5B of the tab 5.

In the embodiment of the invention shown in fig. 3, wherein the tab set's base has four contiguous tabs 5, every other tab 5 has its outer surface 5c provided with a fabricated shape or shapes 50; 52 which is/are capable of being fitted in the recess 71 on an inner wall 70 of the opening 7 present in the wash head. Each fabricated shape 52 comprises at least one boss, which stands outward from the tab's outer surface and which lies immediately above the shoulder 55 when viewing the shoulder from the tab set's base 50. Each shoulder 55 has its outer edge rising to a specific height 5S in a radial direction of the tab set from the tab's outer surface 5c, such that the outer peripheries of all shoulders 5 are located on the periphery of a circle Y2, said circle having its center on the midline K of the tab set's base 50. The circle Y2 has a diameter D2 which is larger than the diameter D1 of the circle Y1 by twice the shoulder's height 5S. The diameter D1 defines the distance of the tabs' 5 outer surfaces from the tabs' midline K. On the other hand, each fabricated shape 52 has its size and shape depending on the size and shape of the respective recess 71 present on the inner surface 70 of the opening 7.

As best visible in fig. 3, one preferred embodiment of the fabricated shape 52 comprises two separate bosses, the combined length of which in a lateral direction of the tab is slightly less than the tab's width 5B. The outer edges of the fabricated shapes lie on a specific circle Y3, which has its center coinciding with that of the circles Y2 and Y1 on the midline K. The circle Y3 has a diameter D3 which is larger than the diameter of the circle Y1 by twice the height of the fabricated shape 52, being nevertheless not larger than the diameter of the circle Y2.

When the tabs 50 of a connecting piece are fitted in the opening 7, the outer edges of a shoulder 55 pointing outward from each tab's 5 outer surface 5c at an angle of about 90 degrees, that means away on a radial direction of circle Y1, and those of a possible fabricated shape 52 are directed towards the opening's inner walls 7; 70. In the event that the inner wall 70 of the opening 7 has a recess 71 in coincidence with a fabricated shape 52 of the tab 5 after the tab 5 has been pushed partially inside the opening, the fabricated shape 52 works its way into the recess 71 and impedes a relative movement between the tab 5 and the body 30 of the wash head 3. As stated above, when the opening 7 is viewed from the direction of the shaft's connecting piece 2, i.e. from above, the opening's inner diameter d increases in size after a boundary surface 72 in such a way that before the boundary surface 72 the opening's 7b inner diameter is d1, and in a section of the opening 7a below the opening's 7 boundary surface 72 opening's inner diameter is d2 which is roughly the same as or slightly smaller than the diameter D2 of the circle Y2 extending by the outer edge of the shoulders 55.

Since the recesses 71 lie in a section of the opening below the boundary surface 72, when the opening is viewed from the direction of the shaft's 1 connecting piece 2, the fabricated shape/shapes 52 shall not be able to move into the recess until the free ends 5a of the connecting piece's 2 tabs 5 are pushed to a sufficient depth into the body's 30 opening 7, i.e. into a section 7b of the opening lying below the boundary surface 72, in which said recesses 72 are located. When the opening 7 is viewed from the direction of a connecting piece 2 coupled to the shaft 1, the shoulder 5, whose length is 55L, shall find itself underneath a bottom edge 70 of the opening 7, thus preventing the tab set 50 from moving in a depth direction of the opening. This promotes the formation of elastic locking between each tab 5 and the body of the wash head 3 as it impedes a movement of the connecting piece 2 in the opening's depth direction.

An important element in the locking between the tabs 5 and the body's opening 7 is the result of a compression force F, which is applied by the inner edges 70 of the body's opening, and possibly also by the tab set's base 50a, to the fairly rigid tabs 5 of a connecting piece 2 contiguous at their top ends 5b with the tab set's base 50a. In order to produce the compression force F between tabs 5 of the tab set 50 and inner edges 70 of the opening, it is necessary that the tabs' outer surfaces 5c lie on a specific periphery Y11 of a circle, whose outer diameter D11 is approximately equal to or even slightly larger than the opening's inner diameter d (the tabs yield slightly inward while being pushed into the body's opening, which is why their outer diameter can be even larger than the diameter d; d1 of the body's opening in an upper section of the opening, preceding the boundary surface 72). Since the opening 7 expands slightly in its bottom end following the boundary surface 72, the compression force F develops primarily between the section of the opening above the boundary surface 72 and the tabs. As illustrated in fig. 3, the fabricated shapes 52, which are included in the outer surface 5c of the tabs 5 and which engage in form locking, are located in the proximity of the free end 5a of each tab, near its bottom edge. Hence, the ratio of the length of a diametrically smaller section, which lies above the opening's 7 boundary surface 72 and enables a compression joint, to the length of a diametrically larger section of the opening, which lies below the opening's boundary surface 72, is approximately 4-5:1-2. When the tab set's base 50 and the tabs contiguous therewith are pushed into the body's opening 7, the fabricated shapes present in the proximity of a free end of the tabs provided with a fabricated shape extend into a opening's section 7b below the opening's boundary surface 72, and the rest of the tabs, including the tab set's base 50, comes into contact with the opening's boundary surface 72, as well as with a section above the opening's boundary surface. A compression pressure Pg is primarily applied on that portion of the tabs' outer surface 5c which is in contact with the section 7a of the opening 7 above the boundary surface 72.

Thus, the locking between a body 30 and a connecting piece 2 consists of components as follows:
a) Between a bottom section 5a of those tabs 5 in a tab set 50, whose bottom section is provided with fabricated shapes, and an opening 7 in the body 30 is developed a form locking as the fabricated shapes 52 of the tabs' 5 outer surface 7a are sliding into recesses 71 in an inner surface 70 of the body's opening 7,
b) Between the tabs' 5 upper section 5b and a boundary 72 in the body's opening 7 is a tight fit, resulting in a compression pressure Pg which establishes a compression locking between the aforesaid components. If necessary, the compression pressure can be increased by pointing the tabs' free ends 5a away from the base 50a in a lengthwise direction K of the base (downward) and, at the same time, slightly outward in a radial direction of the tab set's base.
c) Shoulders 55 at the free ends 5a of the tabs 5 are retained underneath the opening's 7 bottom edge (outer edge), which impedes a relative movement between the opening 7 and the tabs' free ends in a lengthwise direction of the opening 7.

The above-described locking provides an effective impediment to a rotational motion between the shaft 1 and the wash head 3 in a plane of the wash head body 30, as well as to a relative movement of the shaft 1 and the wash head in a lengthwise direction K of the opening 7.

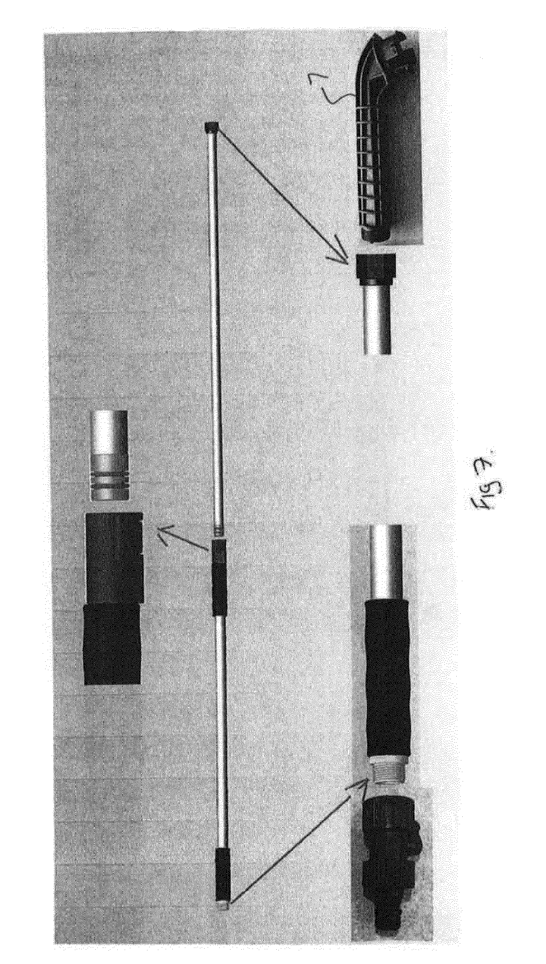

Fig. 7 finally shows that it is possible to connect the shaft 1 of a wash brush 4 with a water supply by means of various extension poles or the like. Thus, instead of a water fitting 1; 16 provided with a seal 1; 17, the shaft 1 can have its opposite to the mouth thereof provided with just a thread to which is attached for example a garden hose by means of a spanner, or with a telescopic shaft 1 as shown in fig. 1 for facilitating the washing process. In this case, the actual water seal is included either in the water supply or in the extension pole.

Described above are just a few embodiments of the invention and it is obvious for a skilled artisan that the invention lends itself to many other implementations within the scope of protection defined in the claims.

Accordingly, by manufacturing both a wash head and a shaft from a reasonably stiff, yet sufficiently elastic plastic, the wash head and the shaft can be designed to be removable from each other.

In the foregoing embodiments of the invention, the tab set's base 50a has four contiguous finger-like tabs 5, of which two tabs have their free ends provided with fabricated shapes 52. Both the finger-like tabs 5 and also those tabs, whose free ends are provided with fabricated shapes, may vary in number. The number of tabs provided with fabricated shapes depends primarily on the number of different locking positions for the wash head 3 and the shaft. In practice, not less than two of the tabs are provided with fabricated shapes. The total number of tabs, on the other hand, depends primarily on the diameter Y1 of the tab set's base 50a, in other words, on the maximum amount of water that the base 50a is designed to pass through.

### List of reference numerals

| | |
|---|---|
| Wash brush | 4 |
| Hollow shaft for the wash brush | 1 |
| Wash head facing end of the shaft | 1; 1a |
| Water fitting facing end of the shaft | 1; 1b |
| Water channel inside the shaft | 1; 15 |
| Mouth of the water channel of the shaft | 15; 15a |
| Water fitting for the water channel | 1; 16 |
| Water seal in the water channel | 1; 17 |
| Annular collar for the shaft | 1; 18 |
| Enlargement of the shaft | 1; 19 |
| Connecting piece | 2 |
| Tab set of the connecting piece | 50 |
| Base of the tab set | 50a |
| Individual tab | 5 |
| Free end of the tab | 5; 5a |
| Tab end contiguous with the base | 5; 5b |
| Outer surface of the tab | 5; 5c |
| Length of the tab | 5; 5L |
| Width of the tab | 5; 5B |
| Fabricated shape in the tab | 5; 52 |
| Shoulder in the tab | 5; 55 |
| Length of the shoulder | 55; 55L |
| Wash head | 3 |
| Body of the wash head | 3; 30 |
| Curving side of the wash head body | 30; 31 |
| Curving long side | 31; 31 a |
| Curving short side | 31; 31 b |
| Straight side of the wash head body | 30; 32 |
| Tongues of the body | 33 |
| Tongue of the body | 33a, 33b, 33c |
| Tips of the tongues | 34 |
| Tip of the tongue | 34a, 34b, 34c |
| Bristles of the wash head | 6 |
| Opening through the wash head body | 7 |
| Top section of the opening | 7a |
| Bottom section of the opening | 7a |
| Inner walls of the opening | 70 |
| Recess in the inner wall of the opening | 71 |
| Boundary surface on the opening's inner surface | 72 |
| Upper, smaller inner diameter of the opening | d; d1 |
| Lower, larger inner diameter of the opening | d; d2 |
| Circle extending by the tab set's base | Y1 |
| Circle, on which the tabs are located | Y1 |
| Circle, on whose periphery the tabs' outer surfaces are located | Y11; Y11', Y11" |
| Diameter of circle Y11 | D11 |
| Circle, on whose periphery the tab shoulders' outer edges are located | Y2 |
| Diameter of circle Y2 | D2 |
| Circle, on whose periphery the fabricated shapes' outer edges are located | Y3 |
| Diameter of circle Y3 | D3 |
| Diameter of the collar | D4 |
| Midline of the connecting piece | K |
| Midline of the opening in the wash head body | T |
| Center of gravity line of the wash head body | P, |
| Compression force between the opening's inner surface and the tabs | F |
| Compression pressure between the opening's inner surface and the tabs | Pg |

## Claims

1. A wash brush (4), which consists of a hollow shaft (1), as well as a wash head (3) removably attachable to the shaft (1) and provided with bristles (6), whereby inside the hollow shaft extends a water channel (1; 15), and a mouth (15; 15a) of the water channel opens into a connecting piece (2) coupled to the shaft, by means of which connecting piece (2) the hollow shaft (1) is removably connectable to the wash head (3), said wash head comprising a rather flat body (30), through which extends an opening (7) and said body (3) having its side opposite with respect to the shaft provided with the bristles (6), **characterized in that**
- the opening (7) in the wash head body has an inner diameter which is larger in a top section (7a) of said opening than in a bottom section (7b) of the same opening, and the body's bottom section (7b) has its inner walls (70) provided with a set of recesses (71),
- the connecting piece (2) has a set of concentric tabs (5), which are contiguous with the periphery of an annular base (50a) of a tab set (50) at regular circumferential distances from each other, whereby on an outer surface (5c) of at least one tab (5), in the proximity of a free end (5a) of the tab, there is at least one fabricated shape (52) capable of being fitted in a recess (71) of the wash head opening (7), such that between the tab set's (50) tabs (5) and the body's opening (7) can be established a form locking by means of the tabs' fabricated shapes (52) and the recesses (71) complementary thereto, and
- the tabs contiguous with the periphery of the tab set's (50) annular base (50a) have an outer diameter (D11) which is approximately equal to or slightly larger than an inner diameter (d) of the opening (7) passing through the wash head body (3; 30) in the top section (7b) of said opening (7), such that between the tabs (5) and said top section (7b) of the opening can be established a tight fit capable of producing a specific compression pressure Pg between the tabs (7) and the top section (7b) of the opening (7) for setting the tabs (5) and the opening (7) in mutual compression locking.

2. A wash brush as set forth in claim 1, **characterized in that** the form locking is established between the body's opening (7) and the tab (5) by fitting a fabricated shape (52) of the tab in a recess (71) on the inner surface (70) of the body's opening (7).

3. A wash brush (4) as set forth in claim 2, **characterized in that** each tab (5) of the connecting piece (2) has its free end (5a) provided with a shoulder (55) extending from the tab's surface towards the opening's inner surface (70) and being transverse to the tab (5), said shoulder (55) extending across a width (5B) of the tab (5), whereby the shoulders (55) of the tab set (50) have their outer edges lying on a specific periphery of a circle (Y3), said circle having a diameter (D3) which is larger than what is an inner diameter (d; d1) of the opening (7) in the wash head body (30) in a top section (7a) of said opening (7) and approximately equal to or larger than an inner diameter (d; d2) of said opening in a bottom section (7b) of the opening.

4. A wash brush as set forth in claim 3, **characterized in that** the shoulders (55) at the free ends (5a) of the tabs (5) remain underneath a bottom edge (outer edge) of the opening (7) after the tabs (5) of the connecting piece (2) have been pushed into the body's opening (7), which impedes a movement between the opening (7) and the tabs' free ends (7a) in a depth direction of the opening (7)

5. A wash brush as set forth in any of the preceding claims, **characterized in that** the tabs' free ends (5a) are pointing away from the tab set's base (50a) in a lengthwise direction (K) of the base and, at the same time, slightly outward in a radial direction of the tab set's base for increasing friction and simultaneously a compression pressure (Pg) between the tabs (5) and the inner surface of the body's opening (7).

6. A wash brush (4) as set forth in claim 3 or 4, **characterized in that** the shaft (1) has its wash head (3) facing side (1; 1 a) at an angle relative to a longitudinal axis of the rest of the shaft, and that said end (1; 1 a) has its edge provided with an annular collar (1; 18), to which attaches the tab set's annular base (50; 50a) pointing away from the plane of the collar, the side of the base opposite to the collar (1; 18) having a set of contiguous tabs (50), whereby the distance between longitudinal axes of each two adjacent tabs (5) remains the same when measured in a circumferential direction of the base.

7. A wash brush (4) as set forth in any of the preceding claims, **characterized in that** the opening (7) in the wash head body has its diameter changing from a smaller one (d; d1) to a larger one (d; d2) when proceeding by way of a sharp-lined boundary surface (72) from the opening's top section (7a) to the opening's bottom section (7b).

8. A wash brush (4) as set forth in any of the preceding claims, **characterized in that** the tab set of the connecting piece (2) has its base (50a) provided with four tabs (5) spaced from each other by a regular distance circumferential of the base, of which two tabs opposite to each other have their outer surface provided with fabricated shapes (52), which are capable of being fitted in the inner surface recesses (70; 71) of the wash head body's opening (7) and which are capable of impeding a relative rotational motion between the connecting piece (2) and the wash head (1) after said fabricated shapes (52) have been fitted in the opening's recesses (71).

9. A wash brush (4) as set forth in claim 8, **characterized in that** each fabricated shape (52), which is capable of being fitted in the recess (71), is located at the free end (5a) of the tab (5), immediately before the shoulder (5; 55) when viewing the tab (5) from the direction of the tab set's base (50a).

10. A wash brush (4) as set forth in claim 7 or 8, **characterized in that** the opening (7) present in the wash head body has its inner surface (70) provided with two recesses (71).

11. A wash brush (4) as set forth in any of the preceding claims, **characterized in that** the shaft (1) has its water channel (15) provided with a water fitting (1; 16) as well as with a water seal (1; 17).

12. A wash brush (4) as set forth in any of the preceding claims, **characterized in that** the wash head (3) has its body (30) provided with three inward curving sides (30; 31), of which every two adjacent sides are connected by a short straight side (30; 32), whereby the wash head body (3; 30) is approximately triangular in its general shape.

13. A wash brush (4) as set forth in claim 12, **characterized in that** two of the inward curving sides (31; 31 a', 31 a") of the wash head body (30) are equal in length and one of the curving sides (31; 31 b) of the wash head body (30) is shorter than these, whereby the triangular wash head body (30) of the wash brush consists of one longer triangle tongue and two shorter triangle tongues of equal length.

14. A wash brush (4) as set forth in claim 13, **characterized in that** the opening (7) in the body (30) of the wash head (3) has its inner surface provided with two recesses (71), which are located in such a way that the wash head (3) and the hollow shaft (1) can be locked either such that the longest tongue of the body (30) of the wash head (3) has its free end pointing at an angle of 180 degrees away from the hollow shaft or directly towards the hollow shaft.

15. A wash brush (4) as set forth in any of the preceding claims, **characterized in that** the length of a diametrically smaller top section (5a) of the opening above the boundary surface (72) of the opening (7), which length enables a compression joint, with respect to the length of a diametrically larger section of the opening, which is a bottom section (5b) of the opening below the boundary surface (72) in a depth direction of the opening, is in the ratio of about 4-5:1-2.
